# EUROPEAN PATENT APPLICATION

(11) **EP 2 020 816 A1**
(43) Date of publication of application: **04.02.2009**
(21) Application number: 08153278.0
(22) Date of filing: 26.03.2008
(51) Int. Cl.: H04N 5/77, H04N 5/782, H04N 5/85, H04N 5/907, H04N 5/225

(54) **Audio/video (A/V) apparatus and method to display device information**

(30) Priority: 23.07.2007 KR 20070073467
(71) Applicant: Samsung Electronics Co., Ltd., Suwon-si, Gyeonggi-do (KR)
(72) Inventor: Jang, In-ra, Gyeonggi-do (KR); Jeong, Soo-man, Gyeonggi-do (KR); Kim, Na-young, Gyeonggi-do (KR); Park, Wan-je, Seoul (KR); Park, Bo-eun, Gyeonggi-do (KR)
(74) Representative: Grünecker, Kinkeldey, Stockmair & Schwanhäusser Anwaltssozietät

(57) **Abstract**

An audio/video (A/V) apparatus to display device information and a method thereof. The AN apparatus includes a manipulator to input an output command for device information in a standby mode, and a controller to control displaying the device information including remaining memory capacity information in the standby mode when the output command is input through the manipulator. Accordingly, a user can easily check the device information regardless of a power state, unnecessary booting time can be reduced, and the device information can be easily checked using a single button.

## Description

### BACKGROUND OF THE INVENTION

### 1. Field of the Invention

The present general inventive concept relates generally to an audio/video (A/V) apparatus to display information and a method thereof. More particularly, the present general inventive concept relates to an A/V apparatus to display the information regardless of power and a method thereof.

### 2. Description of the Related Art

As the digital technology, which has achieved remarkable growth, is realized in association with various A/V devices, functions provided by the AN device are quite diverse and an input unit or an input method to execute an intended function becomes complicated.

Users want to easily acquire device information most frequently checked among device information of the A/V devices. Particularly, even when the AN device is turned off, the user wants to easily check the device information.

Therefore, what is demanded is an A/V apparatus and a displaying method to easily check the device information even when the A/V apparatus is turned off, facilitating the user's manipulation, and providing good visual effect.

### SUMMARY OF THE INVENTION

The present general inventive concept provides an A/V apparatus to display device information regardless of a power state thereof, and a device information displaying method.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may be achieved by providing an AN apparatus including a manipulator to input an output command for device information in a standby mode, and a controller to control displaying of the device information including remaining memory capacity information in the standby mode when the output command is input through the manipulator.

The remaining memory capacity information may represent operable times with respect to applicable resolutions, respectively.

The device information may include remaining battery capacity information which shows a remaining battery capacity in at least one of a search mode, a photo mode, a video mode, a LCD screen use mode and a replay mode.

The controller may control the displaying of the remaining memory capacity information together with the remaining battery capacity information.

When the output command is input, the controller may control the displaying of the device information through a partial booting.

The partial booting may not initialize elements relating to a photo function of the A/V apparatus.

A format of the remaining memory capacity information displayed in the standby mode may be the same as a format of the remaining memory capacity information displayed in an active mode.

When a predetermined time passes after the device information is displayed, the controller may control stopping the displaying of the device information.

The manipulator may enable a user to select device information using tabs provided for device information in a touch screen.

The controller may control the displaying of remaining memory capacity information stored to the A/V apparatus to the user before entering the standby mode.

The foregoing and/or other aspects and utilities of the present general inventive concept may be achieved by providing a device information displaying method, including inputting an output command for device information in a standby mode, and displaying the device information including remaining memory capacity information in the standby mode when the output command is input.

The remaining memory capacity information may represent operable times with respect to applicable resolutions, respectively.

The device information may include remaining battery capacity information to show a remaining battery capacity in at least one of a search mode, a photo mode, a video mode, a LCD screen use mode and a replay mode.

The displaying operation may display the remaining memory capacity information together with the remaining battery capacity information.

The displaying operation may display the device information through a partial booting when the output command is input.

The partial booting may not initialize elements relating to a photo function of the A/V apparatus.

A format of the remaining memory capacity information displayed in the standby mode may be the same as a format of the remaining memory capacity information displayed in an active mode.

When a predetermined time passes after the device information is displayed, the displaying operation may stop displaying the device information.

The output command inputting operation may enable a user to select device information using tabs provided for device information in a touch screen.

The displaying operation may display remaining memory capacity information stored before the A/V device enters the standby mode, to the user.

The foregoing and/or other aspects and utilities of the present general inventive concept may also be achieved by providing a photographing apparatus to shoot a video, the photographing apparatus including a main body, a lens portion to shoot the video, a display to display the video taken through the lens portion, a recording medium to record the video taken through the lens portion, a battery to supply power to the photographing apparatus, and an information button to check at least one of a memory capacity of the recording medium and a battery capacity of the battery.

The recording medium may include an optical recording medium, a removable semiconductor memory, and a non-removable semiconductor memory.

The photographing apparatus may further include a power button to turn on and off, and a photo mode select button to select one of a video shooting and a still image shooting.

The display may display the memory capacity of at least one of the optical recording medium, the removable semiconductor memory, and the non-removable semiconductor memory.

The display may display the battery capacity in each mode according to the selected shooting mode.

The display may display information relating to the memory capacity, and the memory capacity may differ according to a resolution of the taken image.

The foregoing and/or other aspects and utilities of the present general inventive concept may also be achieved by providing a user interface (UI) displaying method of an electronic device including an optical recording medium and a semiconductor recording medium to store digital data, a battery to supply power, and a display to display a memory capacity of the recording media and a battery capacity of the battery. The method includes selecting icons to select the battery and the recording media through select icons of the display, and displaying the battery capacity and the memory capacity according to the selection of the battery select icons and the recording medium select icons.

The battery capacity may include at least one of a remaining battery capacity and an operable time, and the memory capacity may include at least one of a remaining memory capacity and a recordable time.

The memory capacity may be differently displayed according to a resolution of the taken image.

The foregoing and/or other aspects and utilities of the present general inventive concept may also be achieved by providing a user interface (UI) displaying method of an electronic device which includes a removable semiconductor memory and a non-removable semiconductor memory to store digital data, a battery to supply power, and a display to display a memory capacity of the semiconductor memories and a battery capacity of the battery. The method including selecting icons to select the battery and the semiconductor memories through select icons of the display, and displaying the battery capacity and the memory capacity according to the selection of the battery select icons and the semiconductor memory select icons.

The battery capacity may include at least one of a remaining battery capacity and an operable time, and the memory capacity includes at least one of a remaining memory capacity and a recordable time.

The foregoing and/or other aspects and utilities of the present general inventive concept may also be achieved by providing a photographing apparatus to shoot a video, the photographing apparatus includes a main body, a lens portion to shoot the video, a display to display the video taken by the lens portion, first and second recording media to record the video taken by the lens portion, a battery to supply power to the photographing apparatus, and an information button to check memory capacities of the first and second recording media. The display displays the memory capacities of the first and second recording media when the information button is pressed in a power off state.

The first recording medium may be a removable semiconductor memory, and the second recording medium may be a non-removable semiconductor memory.

The memory capacity may be differently displayed according to a resolution of the taken video.

The foregoing and/or other aspects and utilities of the present general inventive concept may also be achieved by providing a photographing apparatus to shoot a video, the photographing apparatus including a main body, a lens portion to shoot the video, a display to display the video taken by the lens portion, a recording medium to record the video taken by the lens portion, a battery to supply power to the photographing apparatus, and an information button to check a capacity of the battery. The display may display the battery capacity when the information button is pressed in a power off state, without displaying a startup image.

The foregoing and/or other aspects and utilities of the general inventive concept may also be achieved by providing an audio/video (A/V) apparatus having a plurality of components, the AN apparatus including a power mode having a standby state and a power-on state, and a manipulator to request device information whether the power mode is in the standby state or the power-on state, wherein the device information is provided without initializing one or more of the components in response to the request for device information while in the standby mode.

The foregoing and/or other aspects and utilities of the general inventive concept may also be achieved by providing a computer-readable recording medium having embodied thereon a computer program to execute a method, wherein the method includes selecting one or more of battery select icons corresponding to a battery and semiconductor memory icons corresponding to semiconductor memories from a display, and displaying one or more of a battery capacity and a memory capacity according to the respective select icons selected.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIGS. 1A and 1B are perspective views of a digital camcorder according to an embodiment of the present general inventive concept;

FIG. 2 is an internal block diagram illustrating the digital camcorder according to an embodiment of the present general inventive concept;

FIG. 3 is a flowchart illustrating a device information displaying method according to another embodiment of the present general inventive concept; and

FIGS. 4A through 4D are views of a screen illustrating the device information according to another embodiment of the present general inventive concept.

### DETAILED DESCRIPTION OF THE PREFERRED EMBODIMENTS

Reference will now be made in detail to embodiments of the present general inventive concept, examples of which are illustrated in the accompanying drawings, wherein like reference numerals refer to the like elements throughout. The embodiments are described below in order to explain the present general inventive concept by referring to the figures.

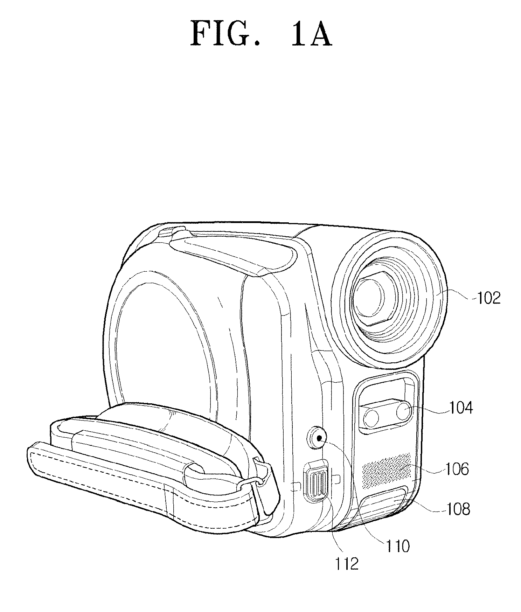

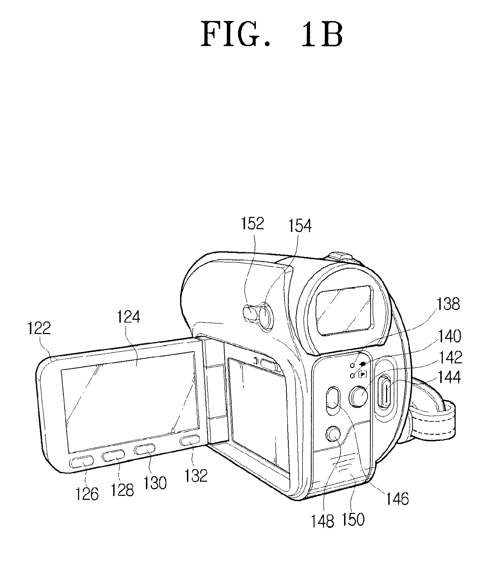

FIGS. 1A and 1B are perspective views illustrating a digital camcorder according to an embodiment of the present general inventive concept.

FIG. 1A depicts a front side and a right side of the digital camcorder according to an embodiment of the present general inventive concept. In the front side of the digital camcorder, a lens portion 102 to capture a subject, a flash 104 to brightly illuminate the subject, an internal microphone 106 to capture an external sound, and a front cover 108 are disposed as illustrated in FIG. 1A.

Inside the front cover 108, a power supply port (not illustrated) to supply a charging power and an external microphone connect port (not illustrated) to connect an external microphone are disposed.

Also, a photo button 110 is disposed in the front side of the digital camcorder to input a photo command for a video and a still image.

A button 112 to input zoom-in and zoom-out commands is disposed in the front side of the digital camcorder.

FIG. 1B depicts a rear side and a left side of the digital camcorder according to an embodiment of the present general inventive concept. A liquid crystal display (LCD) panel 122 is provided in the left side of the digital camcorder as illustrated in FIG. 1B. In the LCD panel 122, an LCD 124, shortcut buttons 126, 128 and 130 to execute shortcut functions, and a display button 132 to input an on-screen display (OSD) information display command are disposed as illustrated in FIG. 1B.

In the rear side of the digital camcorder, light emitting diodes (LEDs) 138 and 140 to indicate the operation state of the digital camcorder, an easy Q button 142, a third photo button 144 to input a photo command for the video, a photo mode select switch 146 to input a photo mode select command, a power button 148 to input a power on and off command, and a rear cover 150 are provided as illustrated in FIG. 1B. The photo mode selectable using the photo mode select switch 146 includes a video mode and a still image mode.

The easy Q button 142 sets an auto stabilization function, an auto focus function, an auto white balance function, and an auto exposure function through a single button manipulation to enable an entry-level user to easily capture the subject.

Inside the rear cover 150, a multi-slot (not illustrated) to insert various memory cards, a universal serial bus (USB) port (not illustrated) for the USB interfacing, and an AN output port (not illustrated) to output audio and video to an external device are disposed.

In the left side of the digital camcorder, an I-check button 152 and a copy button 154 are provided as illustrated in FIG. 1B.

The copy button 154 is used to input a command instructing to copy a file recorded to one of recording media (the embedded flash memory, a disk, and a memory card) embedded/inserted to the digital camcorder to other recording medium.

The I-check button 152 is used to input a command instructing to display information relating to the remaining capacity of the battery and the remaining capacity of the recording medium in the LCD 124.

The I-check button 152 is activated in both a standby mode and an active mode. When a user presses the I-check button 152 in the standby mode or the active mode, the LCD 124 displays the remaining capacity of the battery and the remaining capacity of the recording medium. By consecutively pressing the I-check button 152, the user can determine whether to check the remaining capacity of the battery, the remaining capacity of the memory, or both.

The user consecutively presses the I-check button 152 to select and check the respective device information. Once the I-check button 152 is pressed and the device information is displayed, the user may select the subject to check in the touch-screen display. Alternatively, without pressing the I-check button 152 at all, the user may touch the touch screen and confirm the device information.

For doing so, for example, the touchable LCD 124 may not be exposed to outside in the standby mode of the digital camcorder.

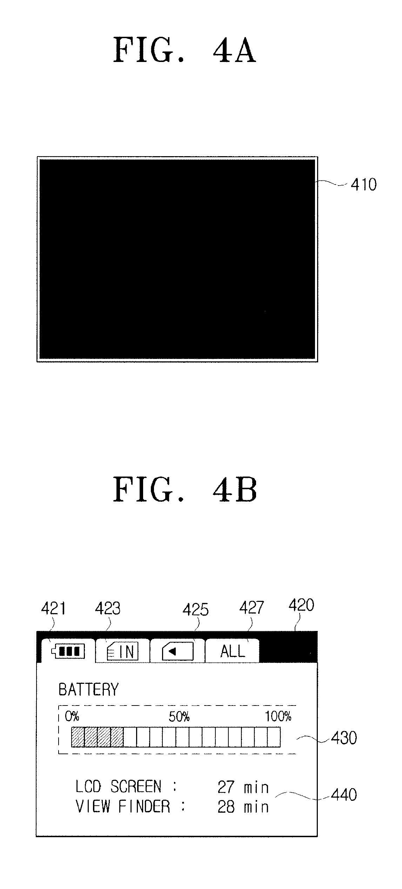

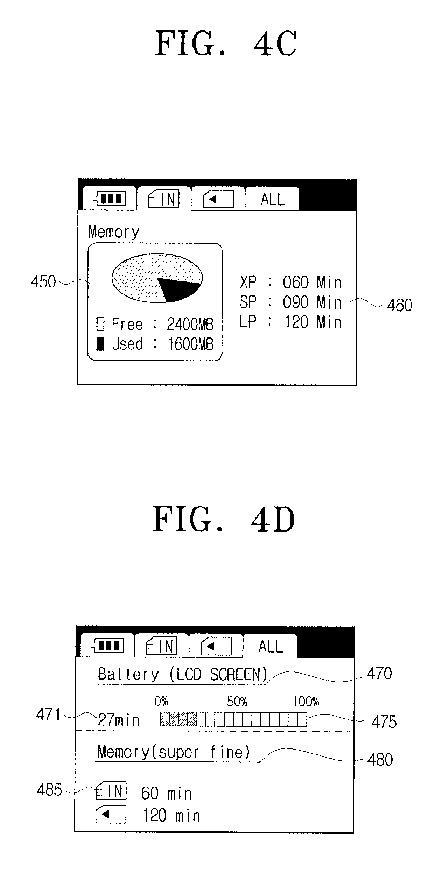

The screens displayed when the I-check button 152 is pressed will be described by referring to FIG. 4.

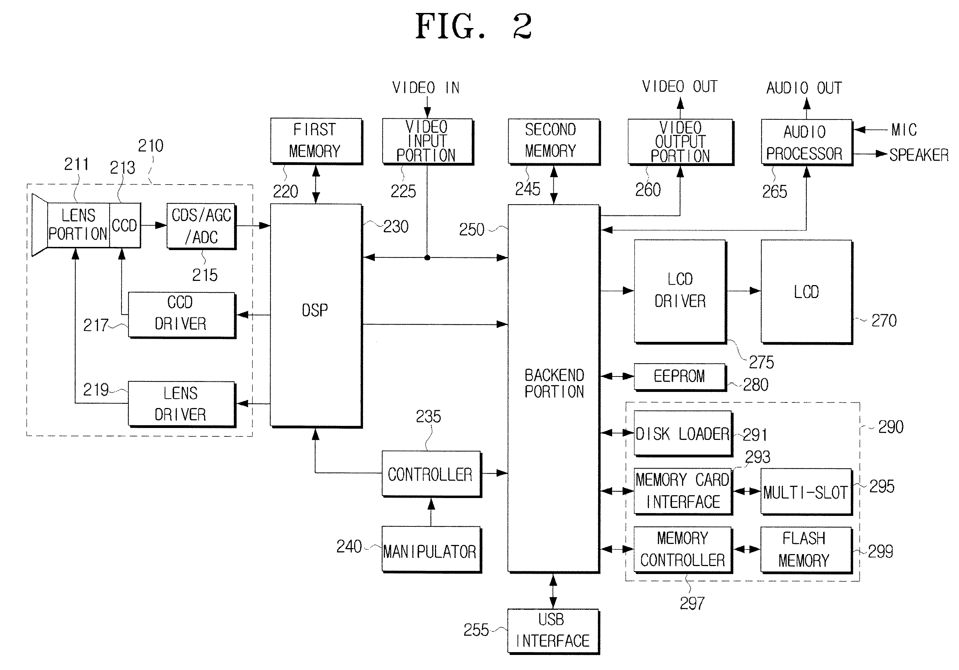

FIG. 2 is an internal block diagram illustrating a digital camcorder according to an embodiment of the present general inventive concept. The digital camcorder of FIG. 2 includes a photo portion 210, a first memory 220, a video input portion 225, a digital signal processor (DSP) 230, a controller 235, a manipulator 240, a second memory 245, a backend portion 250, a USB interface 255, a video output portion 260, an audio processor 265, an LCD 270, an LCD driver 275, an electrically erasable and programmable read only memory (EEPROM) 280, and a recording portion 290.

The photo portion 210 photoelectrically converts an incident optical signal through a lens to an electrical signal and processes the electrical signal. The photo portion 210 includes a lens portion 211, a charge coupled device (CCD) 213, a correlated double sampler/auto gain controller/analog-to-digital converter (CDS/AGC/ADC) 215, a CCD driver 217, and a lens driver 219.

The lens portion 211 forms the optical image of the subject on a surface of the CCD 213, to be explained. The lens portion 211 corresponds to the lens 102 of FIG. 1A.

The lens driver 219 drives the lens portion 211. In more detail, the lens driver 219 makes the lens portion 211 zoom in and out by driving a zoom motor (not illustrated), adjusts a focus of the lens portion 211 by driving a focus motor, and adjusts an opening of an iris (not illustrated) of the lens portion 211.

The CCD 213 is driven by the CCD driver 217. The CCD 213 is a type of image pickup device to generate and output the electric signal corresponding to the optical image formed on the surface by the lens portion 211.

The CDS/AGC/ADC 215 performs the signal processing of correlated double sampling, auto gain controlling, and A/C conversion with respect to the electric signal output from the CCD 213.

Referring to FIG. 2, the first memory 220 is a buffer which provides a recording area required to provide the video signal processing of the DSP 230. The first memory 220 can be implemented using a flash memory and/or a synchronous dynamic random access memory (SDRAM).

The video input portion 225 receives the video from an external device and provides the input video to the DSP 230 and/or the backend portion 250.

The DSP 230 processes the video fed from the photo portion 210 or the video input portion 230 and outputs the processed video to the backend portion 250. For the signal processing, the DSP 230 uses the first memory 220 as a buffer thereof.

In specific, the DSP 230 performs the format conversion, the digital zoom to adjust the video scale, and the auto while balance (AWB) for the video signal output from the photo portion 210, and outputs the processed video signal to the backend portion 250. The DSP 230 performs the auto focus (AF) and the auto exposure (AE) by controlling the lens driver 217.

Also, the DSP 230 compresses the video signal output from the photo portion 210 to a file of JPEG format suitable for the still image and then provides the file to the backend portion 250. The DSP 230 decompresses a JPEG file fed from the backend portion 250 and outputs the video signal to the backend portion 250.

The controller 235 controls the signal processing and the signal transfer of the DSP 230 and the signal processing and the signal transfer of the backend portion 250 according to a user's manipulation command input through the manipulator 240.

The manipulator 240 can include the photo button 110, and the zoom button 112 of FIG. 1A, the shortcut buttons 126, 128 and 130, the display button 130, the easy Q button 142, the third photo button 144, the photo mode select switch 146, the power button 148, the I-check button 152, and the copy button 154 of FIG. 1B.

Referring to FIG. 2, the second memory 245 is a buffer to provide a recording area required to provide the signal processing of the backend portion 250. Also, the second memory 245 contains graphics, menus, and texts required to provide the OSD processing at the backend portion 250. The second memory 245 can be implemented using a flash memory and/or a SDRAM.

The backend portion 250 is responsible to provide the signal processing of the compression, the decompression, and the reproduction processing with respect to the video and/or the audio.

In further detail, the backend portion 250 properly encodes the video signal fed from the DSP 230 in accordance with the display and outputs the encoded video signal to the LCD 270 or the video output portion 260.

The backend portion 250 can OSD-process and output graphics, menus and texts over the video fed from the DSP 230. In doing so, the backend portion 250 reads the graphics, the menus, and the texts recorded to the second memory 245 as the OSD information, and then uses the OSD information to provide the OSD processing.

The backend portion 250 compresses the video signal fed from the DSP 230 and the audio signal fed from the audio processor 265, and provides the compression file generated from the compression to the recording portion 290.

The backend portion 250 restores the video signal and the audio signal by decompressing the compression file input from the recording portion 290, outputs the restored video signal to the LCD 270, and outputs the restored audio signal to the audio processor 265.

When outputting the restored video signal to the LCD 270, the backend portion 250 may apply the OSD processing to the restored video.

The backend portion 250 forwards the JPEG file fed from the DSP 230 to the recorder 290 and forwards the JPEG file fed from the recording portion 290 to the DSP 230.

The USB interface 255 provides a USB communication interface between a USB device such as a PC and printer, and the digital camcorder. The video output portion 260 outputs the video signal from the backend portion 250 to the connected external device (e.g., TV).

Referring to FIG. 2, the audio processor 265 converts an analog signal input through an audio input element such as microphone to a digital audio signal and provides the digital audio signal to the backend portion 250. The audio processor 265 converts a digital audio signal output from the backend portion 250 to an analog signal and outputs the analog signal to the speaker or the connected external device.

The LCD 270 displays the video output from the backend portion 250 in the LCD which is the display element. The LCD 270 is driven by the LCD driver 275.

The EEPROM 280 is a memory containing programs and data required to provide the signal processing and the signal transfer of the backend portion 250.

The recording portion 290 records the compression file output from the backend portion 250 to a recording medium. The recording portion 290 includes a disk loader 291, a memory card interface 273, a multi-slot 295, a memory controller 297, and a flash memory 299.

The disk loader 291 records the compression file input from the backend portion 250 to a mounted disk. The disk loader 291 reads a compression file from the mounted disk and outputs the read compression file to the backend portion 250. The disk can employ a compact disk (CD), a digital versatile disk (DVD), Blu-ray disk (BD), high definition DVD (HD-DVD), and so forth.

The memory card interface 293 records the compression file input from the backend portion 250 to various memory cards inserted to the multi-slot 295.

The memory card interface 293 reads a compression file from the inserted memory cards and outputs the read compression file to the backend portion 250. The memory card can employ a multimedia card (MMC), a secure digital (SD) card, and so on.

The memory controller 297 records the compression file input from the backend portion 250 to the flash memory 299 which is the embedded memory. The memory controller 297 reads the compression file from the flash memory 299 and outputs the read compression file to the backend portion 250.

The controller 235 controls the backend portion 250 and the recording portion 290 to record the compression file output from the backend portion 250 to one of the disk, the memory card, and the flash memory 299. The recording medium to record the recording can be set by the user using a menu provided by the backend portion 250 through the OSD processing.

The controller 235 controls the file copy between the recording media embedded/mounted in the recording portion 290.

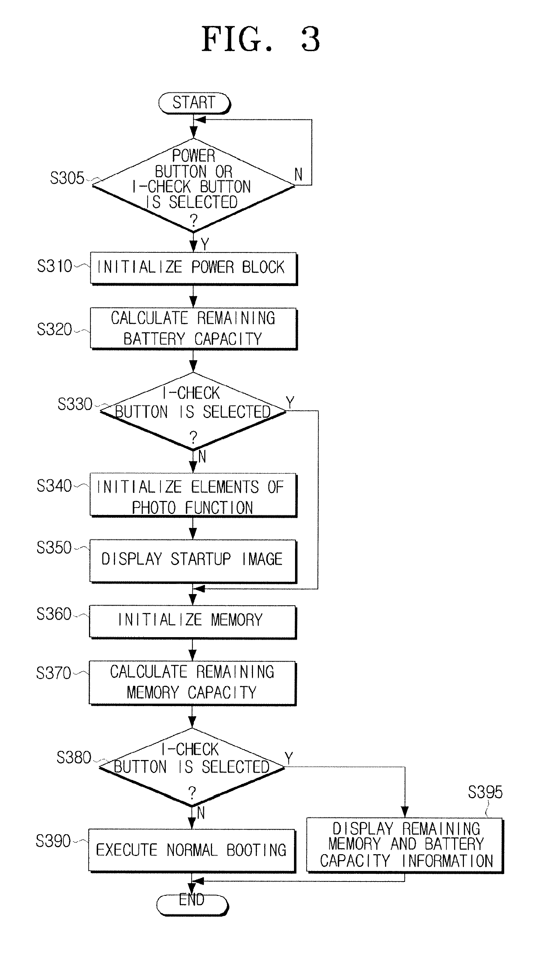

FIG. 3 is a flowchart illustrating a device information displaying method according to another embodiment of the present general inventive concept. Referring to FIGS. 1B and 3, when the user presses the I-check button 152 of the digital camcorder in the standby mode or the active mode in FIG. 1, the remaining battery capacity and the remaining recording medium capacity are displayed in the LCD 124. As described above, the user can determine whether to check the remaining battery capacity, the remaining memory capacity, or both, by consecutively pressing the I-check button 152.

Hereafter, descriptions provide operations of the digital camcorder in the standby mode; that is, in the power-off state, and in the active mode; that is in the power-on state by referring to FIG. 3.

The digital camcorder determines whether the power button or the I-check button is selected (operation S305). When at least one of the power button and the I-check button is selected (operation S305-Y), the digital camcorder initializes the power block (operation S31 0) and calculates the remaining battery capacity (operation S320).

After calculating the remaining battery capacity, when the pressed button is the power button (operation S330-N), the camcorder initializes the elements for the photo function (operation S340) because the user wants to use the photo function.

Upon initializing the elements of the photo function (operation S340), the startup image of the digital camcorder is displayed (operation S350).

By contrast, when the pressed button is the I-check button (operation S330-Y), the photo function is unnecessary because the user wants to confirm merely the device information; that is, merely either the memory information or the battery information of the digital camcorder. Thus, the camcorder initializes the memory (operation S360) without initializing the elements of the photo function (operation S340) and displaying the startup image (operation S350).

Accordingly, the user can more quickly acquire the device information through the partial booting up.

While the startup image is displayed and then the memory is initialized by way of example, determining whether the disk information is stored (not illustrated) before the memory is initialized is possible. When the disk information is stored, the memory is initialized. When the disk information is not stored, the memory may be initialized after confirming the disk information by reading the disk. That is, when the I-check button is pressed, the disk can be loaded after the remaining battery capacity is calculated and then the memory can be initialized.

By contrast, when the I-check button is not pressed, after the time of the remaining battery life is calculated, whether the disk information is stored is determined before the memory is initialized. When the disk information is stored, the memory is initialized. When the disk information is not stored, the disk is read and then the memory is initialized.

Upon initializing the memory, the camcorder calculates the remaining memory capacity (operation S370). The calculated remaining memory capacity displays the memory capacities available in different modes such as XP mode, SP mode and LP mode, with respect to resolutions of the camcorder.

When the I-check button was selected, after calculating the remaining memory capacity, the camcorder displays the remaining capacity information of the memory and the battery in the display (operation S395). When the selected button was the power button, the camcorder executes the normal booting (operation S390).

As such, when the user wants to check only the information of the memory or the battery without using the photo function of the digital camcorder, the initializing of the element of the photo function (operation S340), the displaying of the startup image (operation S350), and the executing of the normal booting (S390) are skipped. As a result, the user can confirm his/her intended information alone more quickly and easily using the I-check button.

In further detail, converting the optical signal to the electric signal and processing the electric signal using the photo portion 210 is unnecessary, the initializations of the lens portion 211, the CCD 213, the CDS/AGC/ADC 215, the CCD driver 217, and the lens driver 219 are skipped.

The initialization of the video input portion 225 is unnecessary because receiving the video from the external device is not needed. The initialization of the DSP 230 is also unnecessary because no video is input from the photo portion 210 or the video input portion 225.

The partial booting is executed while skipping the initializations of the first memory 220, the USB interface 255, and the audio processor 265.

Therefore, to check only the information of the memory or the battery, the user can acquire his/her intended information more quickly and easily using the I-check button. In doing so, according to the manipulation command input through the manipulator 240, the controller 235 to control the signal processing at the backend portion 250, the LCD 270 to display the video output from the backend portion 250, the backend portion 250 to provide OSD-processing and output the graphic and the menus, the second memory 245 to contain the graphics and the menus required to provide the OSD processing, and the recording portion 290 can be initialized.

The remaining memory capacity is calculated after the memory initialization by way of example. When the camcorder is used and then turned off, displaying the remaining memory capacity when the I-check button or the power button is pressed by pre-calculating and storing the remaining memory capacity right before the power off, without calculating the remaining memory capacity (S370).

Particularly, in this situation, displaying the remaining memory capacity without initializing the recording portion 290, by pre-calculating and storing the remaining memory capacity for the recording portion 290 is possible.

FIGS. 4A through 4D are views illustrating a screen displaying the device information according to another embodiment of the present general inventive concept. FIG. 4A illustrates the screen 410 displayed in the LCD 124 in the standby mode. Since the power is off in the standby mode, nothing is displayed.

FIGS. 4B, 4C and 4D illustrate the screen displayed in the LCD 124 when the I-check button is pressed in the standby mode. In FIG. 4B, the displayed screen is divided to a region 420 to select menus using tabs, a region 430 showing the remaining battery capacity, and a region 440 showing a battery operable time according to the mode.

The region 420 to select the menu using the tabs includes a region 421 to select the battery information, a region 423 to select information of the embedded memory, a region 425 to select information of the external memory, and a region 427 to show the information of both the battery and the memory.

The region 430 showing the remaining battery capacity 430 represents a bar graph relating to the remaining battery capacity of the maximum battery capacity when the charging is completed or a new battery is inserted.

The region 440 showing the battery's operable time according to the mode represents an operable time when the LCD screen is used and an operable time when the view finder is used.

As one can see from FIG. 4B, the region 430 showing the remaining battery capacity signifies that 25% of the battery is currently charged. The region 440 showing the battery operable time signifies that the battery is operable for 27 minutes when the LCD screen is used and that the battery is operable for 28 minutes when the view finder is used.

In FIG. 4C, besides the region 420 to select the menu using the tabs, the screen is divided to a region 450 showing the remaining capacity of the available embedded memory and a region 460 showing the operable time of the memory according to the mode of the A/V apparatus.

The region 450 showing the remaining memory capacity provides the user with the remaining memory capacity information using a circle graph relating to the remaining memory capacity of the entire memory capacity and the specific values thereof.

The AN apparatus displays the region 460 showing how long the remaining memory capacity is available according to the resolutions.

In the screen of FIG. 4C, the user can obtain from the region 450 showing the remaining capacity of the available embedded memory that 1600 megabytes (MB) of 2400 MB are in use. Also, the user can obtain from the region 460 showing the operable time of the memory according to the modes that the battery is operable for 60 minutes in the XP mode, 90 minutes in the SP mode, and 120 minutes in the LP mode.

The screen of FIG. 4D illustrates battery information 470 including the remaining battery capacity 475 and the remaining time 471 when the LCD screen is used, and memory information 480 including information 485 indicative of operable times of the embedded memory and the external memory in the super file mode.

From the screen of FIG. 4D, the user can obtain that the battery is operable for 27 minutes when using the LCD screen and that 25% of the battery is charged based on the battery information 470 indicative of the remaining battery capacity 475 and the remaining life 471. Also, the user can obtain from the memory information 480 that the life of the embedded memory is 60 minutes and the life of the external memory is 120 minutes in the super fine mode.

After displaying the screens of FIGS. 4B, 4C and 4D when the user presses the I-check button in the standby mode, in a predetermined time, the camcorder returns to the standby screen of FIG. 4A. The user presses the I-check button in the standby mode to merely check the device information without using the photo function. Thus, it is efficient to automatically change to the standby screen.

When the information of both the battery and the memory is displayed, the operable time of the battery is displayed when the LCD screen is used and the operable time of the memory is displayed in the super fine mode to ease the understanding. The operable times of the battery and the memory in the different modes may be displayed, and the operable times in all modes may be displayed together in the screen. At this time, the user may set the displayed device information.

Initially in the I-check mode, the region 420 to select the menu using the tabs may allow selection of the menus one by one by changing tabs upon pressing the I-check button over again, or allow the selection of the menus by touching the tabs in the touch screen.

While the screen of the battery information is firstly displayed when the I-check button is pressed by way of example, the firstly displayed screen may show the memory information or the information of both the battery and the memory. Also, when the I-check button is pressed after the camcorder is used in a specific mode and then turned off, the information of the memory or the battery in the mode right before the power off may be displayed. Note that those configurations can be set by the user.

While the battery information is represented using the bar graph and the memory information is represented using the circle graph, for example, any graph or chart representing the current capacity to the reference capacity can be employed.

While the battery operable times when using the LCD screen and the view finder are displayed to provide the battery information in each mode, the battery operable times in each mode such as search mode, photo mode, and video mode may be displayed. In doing so, the user can set those configuration.

While the operable periods of the memory in the XP mode, the SP mode and the LP mode are displayed, the operable periods of the memory in other modes may be displayed.

While the device information is confirmed in the standby mode, the device information may be confirmed in the active mode; that is, in the power on state. In this case, to prevent the user from being confused in using the camcorder, the format of the device information displayed in the standby may be the same as the format of the device information displayed in the active mode.

While the tabs are used to see the other information in the screen, for example, various forms such as tree form or popup form may be employed.

While the digital camcorder displays the device information including the remaining memory capacity information in the standby mode to ease the understanding, other A/V apparatus such as digital camera, mobile phone, PMP, and MP3 may display the device information thereof.

While the remaining life information of the memory and the battery is displayed, other device information desired by the user may be checked and the user may set to display his/her intended device information.

When the user confirms the device information in the standby mode, the booting up is executed quite fast through the partial booting. When the user presses the power button while examining the device information, turning on the digital camera by booting only the elements of the photo function is possible, excluding the already booted elements to provide the device information.

The present general inventive concept can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

As set forth above, the AN apparatus and method to display device information regardless of a power state enables a user to confirm the device information regardless of the power state, reduces unnecessary boot-up time by virtue of partial booting, and enables the user to easily check the device information using a single button.

Although various embodiments of the present general inventive concept have been illustrated and described, it would be appreciated by those skilled in the art that changes may be made in this embodiment without departing from the principles and spirit of the general inventive concept, the scope of which is defined in the claims and their equivalents.

## Claims

1. An audio/video (A/V) apparatus, comprising:
a manipulator to input an output command for device information in a standby mode; and
a controller to control displaying of the device information including remaining memory capacity information in the standby mode when the output command is input through the manipulator.

2. The AN apparatus of claim 1, wherein the remaining memory capacity information represents operable times with respect to applicable resolutions, respectively.

3. The AN apparatus of claim 1, wherein the device information comprises:
remaining battery capacity information to show a remaining battery capacity in at least one of a search mode, a photo mode, a video mode, a LCD screen use mode and a replay mode.

4. The AN apparatus of claim 3, wherein the controller controls the displaying of the remaining memory capacity information together with the remaining battery capacity information.

5. The A/V apparatus of claim 1, wherein the controller, when the output command is input, controls the displaying of the device information through a partial booting.

6. The AN apparatus of claim 5, wherein the partial booting does not initialize elements relating to a photo function of the A/V apparatus.

7. The AN apparatus of claim 1, wherein a format of the remaining memory capacity information displayed in the standby mode is the same as a format of the remaining memory capacity information displayed in an active mode.

8. The AN apparatus of claim 1, wherein the controller, when a predetermined time passes after the device information is displayed, controls stopping the displaying of the device information.

9. The A/V apparatus of claim 1, wherein the manipulator enables a user to select device information using tabs provided for device information in a touch screen.

10. The A/V apparatus of claim 1, wherein the controller controls the displaying of remaining memory capacity information stored to the A/V apparatus to the user before entering the standby mode.

11. A device information displaying method, comprising:
inputting an output command for device information in a standby mode; and
displaying the device information including remaining memory capacity information in the standby mode when the output command is input.

12. The device information displaying method of claim 11, wherein the remaining memory capacity information represents operable times with respect to applicable resolutions, respectively.

13. The device information displaying method of claim 11, wherein the device information comprises:
remaining battery capacity information to show a remaining battery capacity in at least one of a search mode, a photo mode, a video mode, a LCD screen use mode and a replay mode.

14. The device information displaying method of claim 13, wherein the displaying operation displays the remaining memory capacity information together with the remaining battery capacity information.

15. The device information displaying method of claim 11, wherein the displaying operation displays the device information through a partial booting when the output command is input.

16. The device information displaying method of claim 11, wherein the partial booting does not initialize elements relating to a photo function of the A/V apparatus.

17. The device information displaying method of claim 11, wherein a format of the remaining memory capacity information displayed in the standby mode is the same as a format of the remaining memory capacity information displayed in an active mode.

18. The device information displaying method of claim 11, wherein, when a predetermined time passes after the device information is displayed, the displaying operation stops displaying the device information.

19. The device information displaying method of claim 11, wherein the output command inputting operation enables a user to select device information using tabs provided for device information in a touch screen.

20. The device information displaying method of claim 11, wherein the displaying operation displays remaining memory capacity information stored before the A/V device enters the standby mode, to the user.

21. A photographing apparatus to shoot a video, the photographing apparatus comprising:
a main body;
a lens portion to shoot the video;
a display to display the video taken through the lens portion;
a recording medium to record the video taken through the lens portion;
a battery to supply power to the photographing apparatus; and
an information button to check at least one of a memory capacity of the recording medium and a battery capacity of the battery.

22. The photographing apparatus of claim 21, wherein the recording medium comprises:
an optical recording medium;
a removable semiconductor memory; and
a non-removable semiconductor memory.

23. The photographing apparatus of claim 21, further comprising:
a power button to turn on and off; and
a photo mode select button to select one of a video shooting and a still image shooting.

24. The photographing apparatus of claim 22, wherein the display displays the memory capacity of at least one of the optical recording medium, the removable semiconductor memory, and the non-removable semiconductor memory.

25. The photographing apparatus of claim 23, wherein the display displays the battery capacity in each mode according to the selected shooting mode.

26. The photographing apparatus of claim 21, wherein the display displays information relating to the memory capacity, and the memory capacity differs according to a resolution of the taken image.

27. A user interface (UI) displaying method of an electronic device including an optical recording medium and a semiconductor recording medium to store digital data, a battery to supply power, and a display to display a memory capacity of the recording media and a battery capacity of the battery, the method comprising:
selecting icons to select the battery and the recording media through select icons of the display; and
displaying the battery capacity and the memory capacity according to the selection of the battery select icons and the recording medium select icons.

28. The UI displaying method of claim 27, wherein the battery capacity comprises at least one of a remaining battery capacity and an operable time, and the memory capacity comprises at least one of a remaining memory capacity and a recordable time.

29. The UI displaying method of claim 27, wherein the memory capacity is differently displayed according to a resolution of the taken image.

30. A user interface (UI) displaying method of an electronic device including a removable semiconductor memory and a non-removable semiconductor memory to store digital data, a battery to supply power, and a display to display a memory capacity of the semiconductor memories and a battery capacity of the battery, the method comprising:selecting icons to select the battery and the semiconductor memories through select icons of the display; and
displaying the battery capacity and the memory capacity according to the selection of the battery select icons and the semiconductor memory select icons.

31. The UI displaying method of claim 30, wherein the battery capacity comprises at least one of a remaining battery capacity and an operable time, and the memory capacity comprises at least one of a remaining memory capacity and a recordable time.

32. A photographing apparatus to shoot a video, the photographing apparatus comprising:
a main body;
a lens portion to shoot the video;
a display to display the video taken by the lens portion;
first and second recording media to record the video taken by the lens portion;
a battery to supply power to the photographing apparatus; and
an information button to check memory capacities of the first and second recording media,
wherein the display displays the memory capacities of the first and second recording media when the information button is pressed in a power off state.

33. The photographing apparatus of claim 32, wherein the first recording medium is a removable semiconductor memory, and the second recording medium is a non-removable semiconductor memory.

34. The photographing apparatus of claim 32, wherein the memory capacity is differently displayed according to a resolution of the taken video.

35. A photographing apparatus to shoot a video, the photographing apparatus comprising:
a main body;
a lens portion to shoot the video;
a display to display the video taken by the lens portion;
a recording medium to record the video taken by the lens portion;
a battery to supply power to the photographing apparatus; and
an information button to check a capacity of the battery,
wherein the display displays the battery capacity when the information button is pressed in a power off state, without displaying a startup image.

36. An audio/video (A/V) apparatus having a plurality of components, the A/V apparatus comprising:
a power mode having a standby state and a power-on state; and
a manipulator to request device information whether the power mode is in the standby state or the power-on state,
wherein the device information is provided without initializing one or more of the components in response to the request for device information while in the standby mode.

37. The A/V apparatus of claim 36, wherein the device information comprises:
one or more of a remaining memory capacity and a remaining battery capacity.

38. The A/V apparatus of claim 36, wherein the plurality of components comprises:
one or more elements of a photo function, a lens portion and driver thereof, a charge coupled device (CCD) and a driver thereof, a correlated double sampler/auto gain controller/analog-to-digital converter (CDS/AGC/ADC), a universal serial bus (USB) interface; and an audio processor.

39. The A/V apparatus of claim 35, wherein the device information is provided without displaying a startup image and executing a normal booting.

40. The A/V apparatus of claim 35, wherein a memory capacity is at least one of calculated in response to a request for the device information and precalculated in response to the power mode being switched from the on state.

41. A computer-readable recording medium having embodied thereon a computer program to execute a method, wherein the method comprises:
selecting one or more of battery select icons corresponding to a battery and semiconductor memory icons corresponding to semiconductor memories from a display; and
displaying one or more of a battery capacity and a memory capacity according to the respective select icons selected.
